# EUROPÄISCHE PATENTSCHRIFT

(11) **EP 3 669 432 B1**
(45) Veröffentlichungstag und Bekanntmachung des Hinweises auf die Patenterteilung: **11.10.2023**
(21) Anmeldenummer: 18752146.3
(22) Anmeldetag: 07.08.2018
(51) Int. Cl.: H02H 7/18, B60R 16/033, H01H 39/00

(54) **ABSCHALTVORRICHTUNG FÜR EIN ELEKTRISCHES VERSORGUNGSNETZ**
SHUTDOWN DEVICE FOR AN ELECTRIC SUPPLY NETWORK
APPAREIL DE COUPURE POUR RÉSEAU DE DISTRIBUTION ÉLECTRIQUE

(30) Priorität: 16.08.2017 DE 102017214302
(43) Veröffentlichungstag der Anmeldung: 24.06.2020
(73) Patentinhaber: Volkswagen Aktiengesellschaft, 38440 Wolfsburg (DE)
(72) Erfinder: BECKER, Christian, 38871 Ilsenburg (DE); SCHRIEVER, Udo, 38104 Braunschweig (DE); SCHWARZER, Carsten, 38302 Wolfenbüttel (DE); KRANIG, Daniel, 38102 Braunschweig (DE)
(86) Internationale Anmeldenummer: PCT/EP2018/071347
(87) Internationale Veröffentlichungsnummer: WO 2019/034474

(56) Entgegenhaltungen:
- EP-A1- 2 811 548
- DE-A1- 10 235 162
- DE-A1-102014 206 270

## Beschreibung

### Technisches Gebiet

Die Erfindung betrifft Abschaltvorrichtungen zur galvanischen Trennung von Stromleitungen, insbesondere zur galvanischen Trennung eines elektrischen Energiespeichers in einem Versorgungsnetz, insbesondere eines Kraftfahrzeugs, von einer elektrischen Last. Weiterhin betrifft die vorliegende Erfindung Ansätze zum Bereitstellen einer Abschaltvorrichtung mit einem pyrotechnischen Trennelement.

### Technischer Hintergrund

In einem elektrischen Versorgungsnetz, wie z. B. einem Versorgungsnetz für elektrisch betreibbare Kraftfahrzeuge mit Traktionsantrieb, ist eine Einrichtung erforderlich, um im Gefahrenfall den Stromfluss in dem Versorgungsnetz zu trennen. Dies kann in herkömmlicher Weise durch den Einsatz von Schmelzsicherungen erreicht werden.

Insbesondere in einem Versorgungsnetz mit einem elektrischen Energiespeicher hängt der Gefahrenfall vom Zustand des elektrischen Energiespeichers ab. Mit anderen Worten, die Stromtragfähigkeit ist bei elektrischen Energiespeichern vom Ladezustand und der Temperatur des Energiespeichers abhängig. Dadurch kann der maximale Entladestrom, wie er etwa bei einem externen Kurzschluss im Versorgungsnetz auftreten kann, im Bereich des 20-fachen bis zum 2-fachen eines Nennstroms liegen, der typischerweise über einen weiten Zustandsbereich des elektrischen Energiespeichers innerhalb der Lade- und Entladestromfähigkeit liegt. Somit kann für die Auslegung der Abschaltvorrichtung eine galvanische Trennung des Versorgungsnetzes innerhalb eines großen Strombereichs mit variierenden Auslöseströmen erforderlich sein.

Heutige Lösungen, ein Versorgungsnetz und deren Komponenten elektrisch abzusichern, verwenden üblicherweise eine serielle Kombination von Hochstromrelais und Schmelzsicherungen, um den großen Strombereich bei Auftreten eines externen Kurzschlusses abzudecken. Die dazu verwendeten Schmelzsicherungen werden in der Regel mit einem hohen Bemessungs-/Nennstrom dimensioniert, um bei temporär erlaubten Überströmen nicht auszulösen. Eine elektrische Überstromregelung bewirkt dabei durch Abschalten des Hochstromrelais die galvanische Trennung bei geringeren Kurzschlussströmen, die nicht oder nur mit einer unzulässig hohen Zeitkonstante zur Auslösung der Schmelzsicherung führen würden. Für hohe Kurzschlussströme trennt die Schmelzsicherung schnell auf, bevor eine Abschaltung durch das Hochstromrelais erfolgen kann.

Der Einsatz der Schmelzsicherung als passives Bauelement stellt dabei sicher, dass auch ein Schutz gegen externen Kurzschluss ohne zusätzliche externe Spannungsversorgung für den Betrieb des Hochstromrelais gewährleistet wird. So kann z.B. beim Einsatz in Kraftfahrzeugen auch bei einer Unterbrechung einer Bordnetzversorgung eine Absicherung des Versorgungsnetzes für den Traktionsantrieb gegen externe Kurzschlüsse sichergestellt werden.

Als Alternative zu einer Schmelzsicherung können weiterhin pyrotechnische Trennelemente eingesetzt werden, um einen elektrischen Energiespeicher im Fehlerfall sicher vom Versorgungsnetz zu trennen. Zur aktiven Auslösung des pyrotechnischen Trennelements wird z.B. bei 12V Systemen ein elektrisches Zündsignal für ein Zündelement direkt vom Airbag-Steuergerät generiert. Dieses Steuergerät ist für einen definierten Zeitraum nach Unterbrechung der Bordnetzversorgung unabhängig und stellt damit im Fehlerfall die Auslösung des pyrotechnischen Trennelements sicher. Bei einem Ausfall der Ansteuerungs-Elektronik kann jedoch keine Trennung mehr erfolgen.

Aus der Druckschrift DE 10 2012 214 879 A1 ist ein Batteriesystem mit einem Hauptstromkreis zur Versorgung eines Verbrauchers bekannt, wobei ein Messwiderstand und eine pyrotechnische Sicherung in dem Hauptstromkreis seriell eingebunden sind, so dass bei Auftreten eines Überstroms die pyrotechnische Sicherung durch einen über den Messwiderstand resultierenden Spannungsabfall ausgelöst wird.

Aus der Druckschrift DE 10 2012 214 835 A1 ist ein pyrotechnischer Schalter für ein Kraftfahrzeugbatteriesystem bekannt, der seriell in einen Schaltstrompfad eingebunden ist, wobei ein pyrotechnisches Schaltelement über den Steuerausgang einer elektronischen Schaltung angesteuert wird, so dass bei Auftreten eines über einen Messwiderstand gemessenen Überstroms das pyrotechnische Trennelement mit einer definierten Ansteuerung ausgelöst werden kann.

Die Druckschrift DE 10 2014 206 270 A1 offenbart ein Batteriesystem zum Versorgen von mehreren geschalteten Verbrauchern an einer Batterie. Die Hochvoltanschlüsse der Batterie sind mit jeweils Verbrauchern zugeordnete Sicherungen verbunden. Eine Schalteinheit weist Schaltzustände auf, wobei in einem ersten Zustand, in dem die mindestens zwei Verbraucher an Hochvoltanschlüsse der Batterie angeschlossen sind, jede Sicherung bei Vorliegen eines über den zugeordneten Verbraucher fließenden Betriebsstrom von diesem von diesem durchflossen ist, und vorgesehen ist, bei Auslösen einer der mindestens zwei Sicherungen von dem ersten Schaltzustand in den zweiten Schaltzustand zu schalten, in dem die mindestens eine Schalteinheit einen über die Batterie, die Hochvoltanschlüsse der Batterie und jeden Verbraucher, dessen zugeordnete Sicherung nicht ausgelöst hat, den fließenden Fehlerstrom unterbricht und/oder jede von der Batterie über die Hochvoltanschlüsse der Batterie und eine nicht ausgelöste Sicherung an das Hochvoltnetz angelegte Fehlerspannung abschaltet.

Die Druckschrift DE 102 35 162 A1 offenbart ein Steuergerät mit einem Wandler mit galvanischer Trennung zur Energieversorgung von wenigstens einer Komponente aufweist. Mit der Komponente ist wenigstens ein Koppelglied mit galvanischer Trennung verbindbar, wobei das Koppelglied zur Datenübertragung dient und wobei der Komponente ein Masseanschluss zugeordnet ist. Ferner kann ein Zündkreis IC vorgesehen sein, der über einen Wandler separat durch die Fahrzeugbatterie versorgt wird.

Es ist Aufgabe der vorliegenden Erfindung, ein verbessertes Sicherungskonzept zur Verfügung zu stellen, das ein zuverlässiges Auslösen bei verschiedenen Fehlerarten ermöglicht.

### Offenbarung der Erfindung

Diese Aufgabe wird durch das Versorgungsnetz mit einer Abschaltvorrichtung mit einem pyrotechnischen Trennelement gemäß Anspruch 1 gelöst.

Weitere Ausgestaltungen sind in den abhängigen Ansprüchen angegeben.

Gemäß einem ersten Aspekt ist ein Versorgungsnetz mit Versorgungsleitungen, einer über die Versorgungsleitungen mit elektrischer Energie versorgten elektrischen Last und mit einer Abschaltvorrichtung, insbesondere ein Versorgungsnetz eines elektrischen Antriebsystems eines Kraftfahrzeugs, vorgesehen, wobei die Abschalteinrichtung umfasst:
- mindestens ein pyrotechnisches Trennelement, das in einer oder mehreren der Versorgungsleitungen des Versorgungsnetzes angeordnet ist;
- eine Zündeinrichtung, die ausgebildet ist, das mindestens eine pyrotechnische Trennelement abhängig von einem Auslösesignal in definierter Weise auszulösen, wobei die Zündeinrichtung durch einen Strom-/Umrichter versorgt ist, der seine elektrische Energie über die Versorgungsleitungen bezieht;
- mindestens ein Auslösesteuergerät, das ausgebildet ist, das Auslösesignal abhängig von einem oder mehreren Fehlerereignissen zu generieren;
- ein weiterer Strom-/Umrichter, der mit den Versorgungsleitungen über einen Schalter verbunden ist, um die Versorgung der Abschaltvorrichtung zur Ruhestromoptimierung des Versorgungsnetzes im Ruhemodus vollständig abzuschalten und bei einem möglichen Fehlerfall wieder einzuschalten,
- ein Spannungsmesser, der ausgebildet ist, um den Schalter über eine Spannungserkennung des einen oder der beiden Auslösesteuergeräte anzusteuern, wenn eine vorgegebene Spannungsschwelle, die gleich oder kleiner ist, als ein Überstrom-Spannungsschwellenwert, bei dessen Überschreiten ein Auslösesignal generiert wird, erreicht wird.

Eine Idee der obigen Abschaltvorrichtung besteht darin, ein Auslösesteuergerät zur Verfügung zu stellen, das Fehlerereignisse sammelt und ein Auslösen des pyrotechnischen Trennelements durch die Zündeinrichtung in vordefinierter Weise veranlasst. Durch Vorsehen des Auslösesteuergeräts ist es daher möglich, mehrere Fehlerereignisse, d. h. eine oder mehrere von vordefinierten Fehlerbedingungen, zu erfassen und stets mithilfe der Zündeinrichtung einen definierten Auslösevorgang zu initiieren, unabhängig von der Art des Fehlerereignisses.

Weiterhin kann das mindestens eine pyrotechnische Trennelement ein pyrotechnisches Zündelement aufweisen, das mit einem Schaltelement so gekoppelt ist, dass bei Auslösen des Zündelements eine galvanische Trennung durch das Schaltelement bewirkt wird. Die Zündeinrichtung und/oder das Auslösesteuergerät können ausgebildet sein, um das Zündelement durch eine vorgegebene elektrische Spannung oder einen vorgegebenen elektrischen Strom für eine vorgegebene Zeitdauer auszulösen. Dies ermöglicht es, ein von den elektrischen Zuständen in dem Versorgungsnetz unabhängiges Auslöseverhalten bereitzustellen.

Es kann vorgesehen sein, dass die Zündeinrichtung und das Auslösesteuergerät über einen oder mehrere separate Stromrichter bzw. Umrichter mit elektrischer Energie versorgt sind. Dadurch kann eine definierte Spannung zum Betrieb des Auslösesteuergeräts bereitgestellt werden.

Gemäß einer Ausführungsform können der eine oder die mehreren separate Umrichter so mit dem Versorgungsnetz gekoppelt sein, dass der eine oder die mehreren separaten Umrichter ihre elektrische Energie aus dem Versorgungsnetz beziehen.

Gemäß einer Ausführungsform kann das Auslösesteuergerät ausgebildet sein, externe Signale zu empfangen und das Auslösesignal zu generieren, wenn ein oder mehrere der folgenden Fehlerereignisse vorliegen:
- es wird ein Überstrom im Vergleich mit einem vorgegebenen Schwellenwert erkannt, der insbesondere abhängig von einem durch Zustandsgrößen angegebenen Zustand eines elektrischen Energiespeichers oder zeitabhängig ist, insbesondere von einem Alterungsmodell, wobei die Zeitabhängigkeit von einem durch Zustandsgrößen angegebenen Zustand des elektrischen Energiespeichers bestimmt ist;
- ein analoges Abschaltsignal, insbesondere ein analoges Kollisionssignal wird empfangen, das einen Aufprall anzeigt,
- eine Kollisionsinformation, die einen Aufprall anzeigt, wird über ein Bussystem, insbesondere einen Fahrzeugbus, empfangen;
- ein digitales Abschaltsignal, insbesondere ein Kollisionssignal, das einen Aufprall anzeigt, wird von extern empfangen.

Es kann vorgesehen sein, dass das Auslösesteuergerät zum Überwachen der Funktion der Zündeinrichtung und die Zündeinrichtung zum Überwachen des Auslösesteuergeräts und des Zündelements ausgebildet sind.

Weiterhin kann das Auslösesteuergerät durch den Stromrichter bzw. Umrichter oder durch einen separaten Stromrichter bzw. Umrichter versorgt sein, der elektrische Energie über die Versorgungsleitungen bezieht.

Es kann vorgesehen sein, dass der Stromrichter bzw. Umrichter mit den Versorgungsleitungen zwischen einem elektrischen Energiespeicher und dem Trennelement verbunden ist, so dass auch nach dem Auslösen des mindestens einen Trennelements der Stromrichter bzw. Umrichter mit elektrischer Energie versorgt wird.

### Kurzbeschreibung der Zeichnungen

Ausführungsformen werden nachfolgend anhand der beigefügten Zeichnungen erläutert. Es zeigen:
- Figur 1: eine schematische Darstellung eines Versorgungssystems für einen Traktionsantrieb in einem Kraftfahrzeug mit einem elektrischen Energiespeicher;
- Figur 2: eine schematische Darstellung eines weiteren Versorgungssystems für einen Traktionsantrieb in einem Kraftfahrzeug mit einem elektrischen Energiespeicher; und
- Figur 3: eine schematische Darstellung eines weiteren Versorgungssystems für einen Traktionsantrieb in einem Kraftfahrzeug mit einem elektrischen Energiespeicher.

### Beschreibung von Ausführungsformen

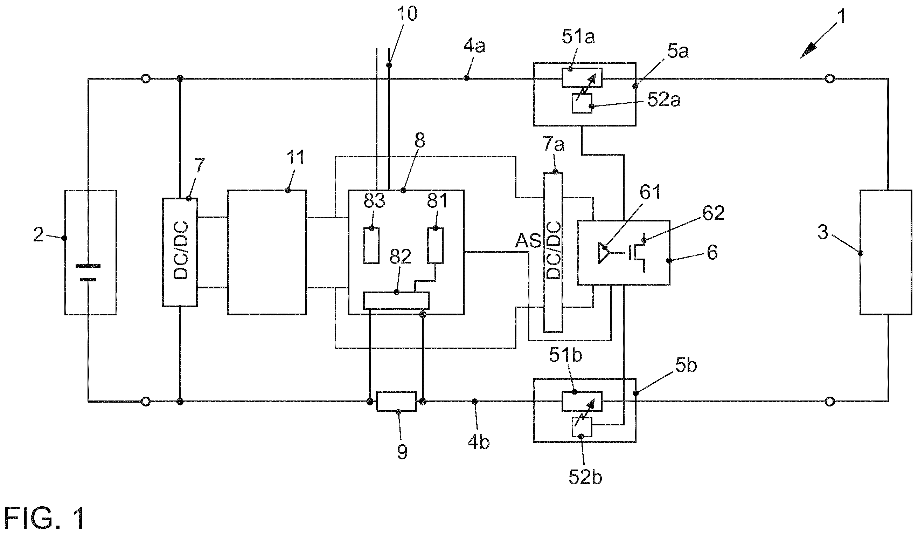

Figur 1 zeigt ein Versorgungsnetz 1 mit einem elektrischen Energiespeicher 2 in Form einer wiederaufladbaren Batterie und einer elektrischen Last 3, die beispielsweise als Elektroantrieb des elektrisch betreibbaren Kraftfahrzeugs ausgebildet sein kann. Der elektrische Energiespeicher 2 und die elektrische Last 3 sind über eine erste und eine zweite Versorgungsleitung 4a, 4b elektrisch miteinander verbunden.

In einer der Versorgungsleitungen 4a, 4b oder in beiden Versorgungsleitungen 4a, 4b ist ein pyrotechnisches Trennelement 5a bzw. 5b angeordnet, um bei entsprechender Ansteuerung die erste oder die erste und zweite Versorgungsleitung 4a, 4b galvanisch zu trennen, um so den elektrischen Energiespeicher 2 von der elektrischen Last 3 abzukoppeln.

Jedes der Trennelemente 5a, 5b weist ein Trennelement 51a, 51b und ein pyrotechnisches Zündelement 52a, 52b auf, die an dem jeweiligen Trennelement 51a, 51b angeordnet ist. Bei Auslösen des pyrotechnischen Zündelements (Zündpille) 52a, 52b wird das jeweilige Trennelement 51a, 51b dauerhaft unterbrochen und somit der Stromfluss zwischen dem elektrischen Energiespeicher 2 und der elektrischen Last 3 galvanisch unterbrochen.

Zum Auslösen des Zündelements 52a, 52b ist eine Zündeinrichtung 6 vorgesehen. Die Zündeinrichtung 6 legt im Wesentlichen basierend auf einem Auslösesignal AS einen definierten elektrischen Zustand an die pyrotechnischen Zündelemente 52a, 52b an, um diese auszulösen. Beispielsweise kann die Zündeinrichtung 6 einen Operationsverstärker 61 und einen davon angesteuerten Leistungsschalter 62 aufweisen, um eine vorgegebene Auslösespannung an die pyrotechnischen Zündelemente 52a, 52b anzulegen. Die Zündeinrichtung 6 hat die Aufgabe, bei Vorliegen des Auslösesignals AS das Zündsignal an das eine oder die mehreren Zündelemente 52a, 52b mit einer definierten Spannung anzulegen und eine definierte Stromstärke für eine definierte Zeitdauer zu generieren.

Die Zündeinrichtung 6 erhält die zum Auslösen der Zündelemente 52a, 52b benötigte elektrische Energie über die Versorgungsleitungen 4a, 4b, wobei ein erster Strom-/Umrichter 7 z. B. in Form eines DC/DC-Wandler (Gleichspannungswandler) vorgesehen ist, der mit der ersten und zweiten Versorgungsleitung 4a, 4b verbunden ist und die benötigte Spannung zum Auslösen der Zündelemente 52a, 52b, beispielsweise 16V, den Zündschaltkreisen der Zündeinrichtung 6 bereitstellt. Die Versorgungsspannung von beispielsweise 5 V zum Betrieb der Zündeinrichtung 6 kann vorzugsweise über einen an den ersten Strom-/Umrichter 7 gekoppelten zweiten Strom-/Umrichter 7a, alternativ über einen an den ersten Strom-/Umrichter 7 gekoppelten Spannungsteiler (nicht dargestellt) oder alternativ über einen separaten direkt an das Versorgungsnetz angeschlossen Strom-/Umrichter (nicht dargestellt) erfolgen.

Weiterhin alternativ können die Zündschaltkreise direkt mit der Spannung des Energiespeichers oder alternativ mit einer Spannung die durch Zuhilfenahme eines Spannungsteilers aus der Spannung des Energiespeichers gewonnen wird, versorgt werden. Über den eingangs genannten Ansatz kann alternativ auch die Versorgung der Zündeinrichtung 6 und des Auslösesteuergeräts 8 erfolgen.

Insbesondere sind der/die Strom-/Umrichter 7 als herkömmliche DC/DC-Wandler ausgebildet. Wesentlich ist, dass die Zündeinrichtung 6 und somit das Zündelement 52a, 52b aus dem zu überwachenden Versorgungsnetz 1 selbst mit elektrischer Energie versorgt wird, so dass im Fehlerfall, insbesondere bei Ausfall einer etwaigen sonstigen Versorgungsquelle, wie z. B. einer Bordnetzversorgung, das Auslösen der pyrotechnischen Trennelemente 5a, 5b gewährleistet bleibt. Somit kann über einen großen Spannungsbereich des Versorgungsnetzes 1 eine konstante Spannung für die Zündschaltkreise und die Versorgungsspannung der Zündeinrichtung 6 für ihren Betrieb bereitgestellt werden. Außerdem kann bis zur vollständigen Entladung des das Versorgungsnetz 1 speisenden Energiespeichers die Versorgung der Zündeinrichtung 6 sichergestellt werden. Durch das Vorsehen mindestens eines Strom-/Umrichters 7 können die Zündelemente 52a, 52b zudem potenzialfrei angesteuert werden und sind daher nicht von den Spannungspotenzialen auf der jeweiligen Versorgungsleitung 4a, 4b abhängig.

Um auch im Fehlerfall bei einem kurzschlussbedingten Spannungseinbruch / sehr niedrigen Spannungen im Versorgungsnetz 1, oder eines Defekts des die Zündeinrichtungen 6 versorgenden Strom-/Umrichters 7 ein zuverlässiges Auslösen der pyrotechnischen Trennelemente 5a, 5b zu gewährleisten, kann der Strom-/Umrichter 7 mit einem Energiespeicher 11, vorzugsweise einem Kondensator gekoppelt sein, der im Fehlerfall die betriebsgemäße elektrische Energie für die zur Zündeinrichtung 6 gehörenden Zündschaltkreise der Zündelemente 52a, 52b, zumindest zeitlich bis zum Auslösen der Zündelemente, bereitstellen kann. Gleichzeitig kann durch den vorzugsweise Energiespeicher 11 auch die Versorgungsspannung der Zündeinrichtung 6 über die o.g. Versorgungsmöglichkeiten gepuffert werden.

Es ist ein Auslösesteuergerät 8 vorgesehen, die bei verschiedenen Fehlerereignissen das eine oder die beiden pyrotechnischen Trennelemente 5a, 5b auslösen kann. Das Auslösesteuergerät 8 kann eine Steuerung 81 aufweisen, die mit einem Spannungsmesser 82 verbunden ist. Der Spannungsmesser 82 misst den Stromfluss in dem Versorgungsnetz beispielsweise durch Messen einer Spannung über einen in der zweiten Versorgungsleitung 4b angeordneten (ersten) Messwiderstand (Shunt) 9. Der Spannungsmesser kann beispielsweise als Komparatorschaltung ausgebildet sein, die die Spannungspotenziale an beiden Anschlüssen des Messwiderstandes miteinander vergleicht. Alternativ kann die Strommessung mithilfe eines Hallsensors, eines magnetoresistiven Sensors oder eines Fiber Optic Current Sensors (Faraday Effekt) durchgeführt werden.

Weiterhin kann das Auslösesteuergerät 8 mit externen Signalleitungen verbunden sein, um beispielsweise ein Kollisionssignal, das einen Unfall oder einen Aufprall des Kraftfahrzeugs anzeigt, zu empfangen. Das Kollisionssignal kann ein analoges oder digitales Signal sein. Weiterhin kann das Kollisionssignal auch über ein Bussystem, insbesondere einen Fahrzeugbus 10, bereitgestellt werden und von einer Kommunikationseinrichtung 83 des Auslösesteuergeräts 8 empfangen werden. Insgesamt kann die Steuerung 81 ein Auslösesignal AS generieren, bei einem oder mehreren der nachfolgend aufgeführten Ereignisse:
- Es wird durch Strommessung z.B. mithilfe des mindestens einen Messwiderstands 9, ein Überstrom im Vergleich mit einem vorgegebenen Schwellenwert erkannt. Bei (Gesetzes)-Anforderungen, die eine Sensorplausibilisierung (z.B. OBDII für Nordamerika, C6b für China oder ASIL Einstufungen) erfordern, kann eine zweite Strommessung vorgesehen werden, die z.B. mithilfe eines zweiten Messwiderstands oder einer alternativen Messanordnung, wie z.B. mit einem Hallsensor, einem magnetoresistiven Sensor oder einem Fiber Optic Current-Sensor durchgeführt werden kann. Die so erhaltenen Messwerte können vom Auslösesteuergerät gegeneinander plausibilisiert werden und anschließend durch Vergleichen des plausibilisierten Messwertes mit einem vorgegebenen Schwellenwert ein Überstrom erkannt werden.
- Der vorgegebene Schwellwert kann fest vorgegeben, abhängig von einem Zustand des elektrischen Energiespeichers 2 oder auch zeitlich abhängig (z.B. bei Alterungsmodellen) von einem durch Zustandsgrößen angegebenen Zustand des elektrischen Energiespeichers 2 sein, wobei der Zustand des elektrischen Energiespeichers 2 durch dessen Temperatur, Strom, Spannung und/oder Ladezustand angegeben sein kann. Diese Zustandsgrößen können direkt gemessen werden oder über die Kommunikationseinrichtung 83, beispielsweise über den CAN-Bus 10, empfangen werden.

- Es wird von der Kommunikationseinrichtung 83 ein analoges Abschaltsignal, insbesondere ein Kollisionssignal, das einen Aufprall anzeigt, empfangen, wodurch die Steuerung 81 veranlasst wird, das Auslösesignal AS zu generieren. Das analoge Abschaltsignal, insbesondere ein Kollisionssignal, kann z.B. von einem Airbag-Steuergerät generiert werden.
- Weiterhin kann eine beliebig festgelegte Information (z.B. von einem Diagnosetester initiiert), insbesondere eine Kollisionsinformation auch über ein Bussystem, insbesondere einen Fahrzeugbus 10, empfangen werden, wodurch die Steuerung 81 veranlasst wird, das Auslösesignal AS zu generieren.
- Weiterhin kann ein digitales Abschaltsignal, insbesondere ein Kollisionssignal, von extern empfangen werden, wodurch die Steuerung 81 veranlasst wird, das Auslösesignal AS zu generieren.

Das Auslösesteuergerät 8 kann über den Strom-/Umrichter 7 mit elektrischer Energie versorgt werden oder über einen separaten (nicht gezeigten) Strom-/Umrichter, der ebenfalls von dem Versorgungsnetz gespeist wird. Somit kann das Auslösesteuergerät 8 aus dem elektrischen Energiespeicher 2 des Versorgungsnetzes 1 gespeist werden, so dass dessen Funktionsfähigkeit erhalten bleibt, bis der elektrische Energiespeicher 2 entladen ist. Bei beiden o.g. Möglichkeiten kann die Energieversorgung des Auslösesteuergerätes 8 vorzugsweise mit dem Energiespeicher 11 gepuffert werden.

Das dargestellte Versorgungsnetz 1 hat weiterhin den Vorteil, dass mithilfe der Zündeinrichtung 6 auch mehrere, d. h. eine beliebige Anzahl, von pyrotechnischen Trennelementen 5a, 5b ausgelöst werden können. Auch ist eine Trennung von seriell angeordneten pyrotechnischen Trennelementen 5a, 5b möglich, was bei Schmelzsicherungen nicht möglich wäre, da eine aufgetrennte Sicherung das Trennen von weiteren Sicherungen verhindert. Durch das Vorsehen von mehreren pyrotechnischen Trennelementen 5a, 5b in einem sich verzweigenden Versorgungsnetz 1 können einzelne elektrische Lasten von dem Versorgungsnetz 1 abgetrennt werden und somit zum Aufrechterhalten eines Notlaufbetriebs andere Lasten mit dem elektrischen Energiespeicher 2 verbunden bleiben.

Die Kommunikation zwischen dem Auslösesteuergerät 8 und dem Zündelement 6 kann zusätzlich gemäß einem Diagnoseprotokoll durchgeführt werden, wobei in dem Auslösesteuergerät 8 und/oder dem Zündelement 6 ein Watchdog bzw. eine entsprechende Überwachungsschaltung vorgesehen sein kann, die die Funktionsweise des jeweils anderen Bauelements überwacht. Dieses kann periodisch ein Überwachungssignal aussenden, anhand dessen das jeweils andere Bauelement erkennen kann, ob eine ordnungsgemäße Funktion des das Überwachungssignal aussendenden Bauelements vorliegt. Wird durch die entsprechende Überwachungsschaltung ein Fehler festgestellt, so kann dies signalisiert werden und ggfs. das Trennelement ausgelöst werden.

Die Zündeinrichtung 6 kann weiterhin durch einen gepulsten Teststrom die Funktionsfähigkeit der Zündelemente 52a, 52b diagnostizieren. Weiterhin kann die Zündeinrichtung 6 in an sich bekannter Weise ausgebildet sein, eine Eigendiagnose des Zündkreises auszuführen. Wird ein Fehler festgestellt, kann als Fehlerreaktion ein Auslösen des einen oder der mehreren Zündelemente durchgeführt werden.

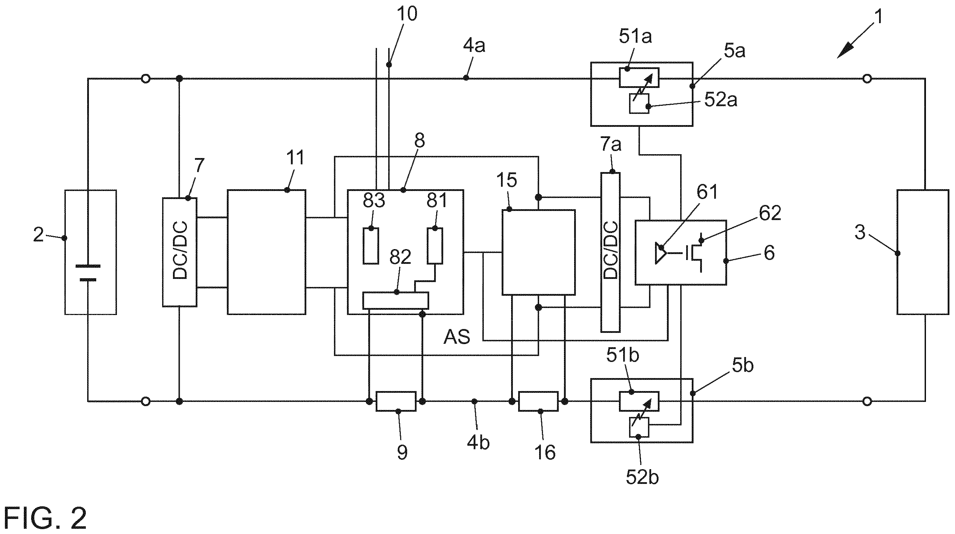

Wie beispielhaft in Figur 2 dargestellt, kann zur Erfüllung von ASIL- und OBDII Anforderungen ein zu dem ersten Auslösesteuergerät 8 redundantes zweites Auslösesteuergerät 15 vorgesehen sein, um eine zweite Strommessung z.B. mithilfe des zweiten Messwiderstandes 16 durchzuführen und eine Überstromerkennung analog und redundant zu der Überstromerkennung in dem ersten Auslösesteuergerät 8 auszuführen. Abhängig von den Überstromerkennungen der beiden Auslösesteuergeräte 8, 15 kann in einem der Auslösesteuergeräte 8, 15 ein Auslösesignal abhängig von den Ergebnissen beider Überstromerkennungen generiert werden

Die Überstromerkennung kann mithilfe eines ersten und eines zweiten analogen Komparators durchgeführt werden, die den jeweiligen Spannungsabfall über dem betreffenden Messwiderstand mit einem vorgegebenen Überstrom-Schwellenwert, der einem festgelegten Überstrom entspricht, vergleicht. Wird dieser Überstrom-Schwellenwert durch Überstrom erreicht, wird in dem betreffenden Auslösesteuergerät 8, 15 der Überstrom detektiert. Durch eine Kommunikationsverbindung zwischen den Auslösesteuergeräten 8, 15 kann eines der beiden Auslösesteuergeräte 8, 15 ein Auslösesignal an die Zündeinrichtung 6 zur Trennung des Versorgungsnetzes 1 bereitstellen, insbesondere wenn beide Auslösesteuergeräte 8, 15 einen Überstrom anzeigen.

Zur Erfüllung der ASIL- und OBDII Anforderung wird auch die Funktionsweise des zweiten Auslösesteuergerätes 15 sowie die der zusätzlichen Bauelemente dieser Ausführungsvariante durch ein eingangs bereits näher erläutertes Diagnoseprotokoll überwacht.

Das zweite Auslösesteuergerät 15 kann abhängig von der Anforderung in welchem Funktionszustand (Betriebs- oder Ruhemodus) des Versorgungsnetzes (z.B. Last zu bzw. abgeschaltet) ASIL- und/oder OBDII-Ziele erfüllt werden sollen, unterschiedlich versorgt sein.

Für den Fall, das in beiden Funktionszuständen oder nur im Ruhemodus ASIL- und/oder OBDII-Ziele erfüllt werden sollen, erfolgt die Versorgung mit elektrischer Energie beider Auslösesteuergeräte über einen Strom-/Umrichter oder separate Strom-/Umrichter, die aus dem Versorgungsnetz mit vorzugsweise 16V versorgt werden. Wenn nur im Betriebszustand ASIL- und/oder OBDII-Ziele erfüllt werden sollen, kann die Versorgung, wie im obigen Fall, erfolgen oder aber durch eine Kombination aus einer Versorgung mit vorzugsweise 16V über Strom-/Umrichter aus dem Versorgungsnetz für das erste Auslösesteuergerät 8 und einer Versorgung mit vorzugsweise 5V über ein externes Versorgungsnetz, insbesondere ein ab- bzw. zuschaltbares 12V oder 48V Kraftfahrzeugbordnetz, für das zweite Auslösesteuergerät 15 erfolgen.

Das/die Auslösesteuergeräte 8, 15 kann/können vorzugsweise zur Senkung des Energiebedarfs in einen "Sleep Modus (Standby Modus)" für den Ruhemodus der Abschaltvorrichtung versetzt werden. Wird an einem/den Auslösesteuergerät(en) 8, 15 ein Signalpegel, der einen Überstrom angibt, detektiert, z.B. über die jeweilige Komparatorschaltung, werden das/die Auslösesteuergerät(e) 8, 15 geweckt und die Abschalteinrichtung in den Betriebsmodus versetzt. Dies kann für alle eingangs beschriebenen Versorgungskonzepte der Abschalteinrichtung realisiert werden.

Werden zwei Auslösesteuergeräte für die Erfüllung von ASIL- oder OBDII Anforderungen nur im Betriebsmodus des Versorgungsnetzes benötigt, kann die Versorgung eines Auslösesteuergerätes über ein externes Versorgungsnetz, insbesondere ein ab- bzw. zuschaltbares 12V oder 48V Kraftfahrzeugbordnetz, abgeschaltet werden und somit der Ruhestrombedarf der Abschalteinrichtung gesenkt werden.

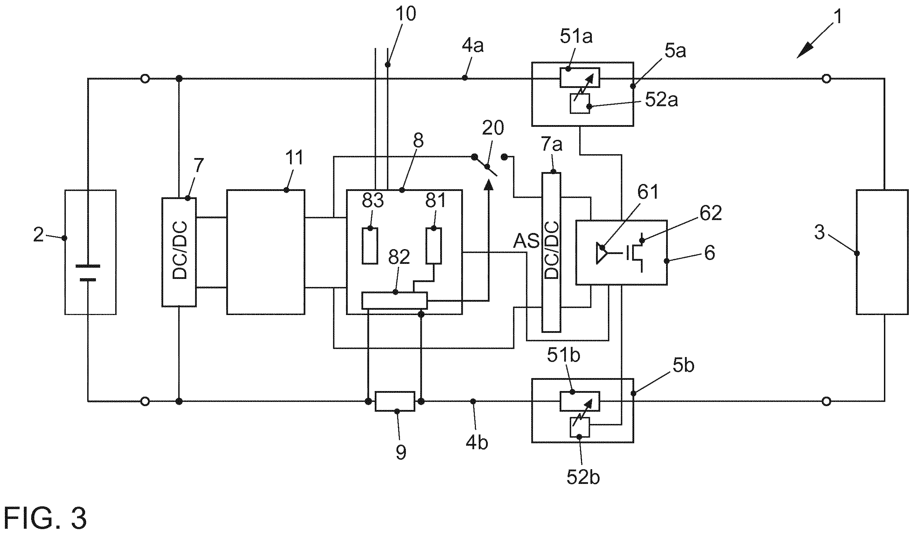

In Figur 3 ist eine Ausführungsform dargestellt, die einen Schalter 20 aufweist. Der Schalter 20 dient dazu, die Versorgung der Abschaltvorrichtung zur Ruhestromoptimierung des Versorgungsnetzes im Ruhemodus vollständig abzuschalten und bei einem möglichen Fehlerfall wieder einzuschalten. Zur Aktivierung der Abschaltvorrichtung kann der Schalter 20 über die Spannungserkennung des einen oder der beiden Auslösesteuergeräte 8, 15 angesteuert werden, wenn eine vorgegebene Spannungsschwelle, die gleich oder kleiner ist, als der Überstrom-Spannungsschwellenwert, erreicht wird. Die Abschaltvorrichtung bleibt deaktiviert, wenn die Spannungserkennung erkennt, dass die vorgegebene Spannungsschwelle nicht erreicht wird.

### Bezugszeichenliste

- 1: Versorgungsnetz
- 2: elektrischer Energiespeicher
- 3: elektrische Last
- 4a, 4b: Versorgungsleitungen
- 5a, 5b: pyrotechnische Trennelemente
- 51a, 51b: Schaltelemente
- 52a, 52b: Zündelemente
- 6: Zündeinrichtung
- 61: Operationsverstärker
- 62: Leistungsschalter
- 7: erster Strom-/Umrichter
- 7a: zweiter Strom-/Umrichter
- 8: Auslösesteuergerät
- 81: Steuerung
- 82: Spannungsmesser
- 83: Kommunikationseinrichtung
- 9: Messwiderstand
- 10: Fahrzeugbus
- 11: Energiespeicher
- 15: zweites Auslösesteuergerät
- 16: zweiter Messwiderstand
- 20: Schalter

## Patentansprüche

1. Versorgungsnetz (1) mit Versorgungsleitungen (4a, 4b), einer über die Versorgungsleitungen (1) mit elektrischer Energie versorgten elektrischen Last und mit einer Abschaltvorrichtung, insbesondere ein Versorgungsnetz (1) eines elektrischen Antriebsystems eines Kraftfahrzeugs, wobei die Abschalteinrichtung umfasst:
- mindestens ein pyrotechnisches Trennelement (5a, 5b), das in einer oder mehreren der Versorgungsleitungen (4a, 4b) des Versorgungsnetzes (1) angeordnet ist;
- eine Zündeinrichtung (6), die ausgebildet ist, das mindestens eine pyrotechnische Trennelement (5a, 5b) abhängig von einem Auslösesignal auszulösen, wobei die Zündeinrichtung (6) durch einen Strom-/Umrichter (7) versorgt ist, der seine elektrische Energie über die Versorgungsleitungen (4a, 4b) bezieht;
- ein Auslösesteuergerät (8), das ausgebildet ist, das Auslösesignal abhängig von einem oder mehreren Fehlerereignissen zu generieren;
**dadurch gekennzeichnet, dass** die Abschalteinrichtung weiterhin umfasst:
- ein weiterer Strom-/Umrichter (7a), der mit den Versorgungsleitungen (4a, 4b) über einen Schalter (20) verbunden ist, um die Versorgung der Abschaltvorrichtung (6) zur Ruhestromoptimierung des Versorgungsnetzes (1) im Ruhemodus vollständig abzuschalten und bei einem möglichen Fehlerfall wieder einzuschalten,
- ein Spannungsmesser (82), der ausgebildet ist, um den Schalter (20) über eine Spannungserkennung des einen oder der beiden Auslösesteuergeräte (8, 15) anzusteuern, wenn eine vorgegebene Spannungsschwelle, die gleich oder kleiner ist, als ein Überstrom-Spannungsschwellenwert, bei dessen Überschreiten ein Auslösesignal generiert wird, erreicht wird.

2. Versorgungsnetz (1) nach Anspruch 1, wobei das mindestens eine pyrotechnische Trennelement (5a, 5b) ein pyrotechnisches Zündelement (52a, 52b) aufweist, das mit einem Schaltelement (51a, 51b) so gekoppelt ist, dass bei Auslösen des Zündelements (52a, 52b) eine galvanische Trennung durch das Schaltelement (51a, 51b) bewirkt wird, wobei das Auslösesteuergerät (8) oder die Zündeinrichtung (6) so ausgebildet sind, um das Zündelement (52a, 52b) durch eine für eine vorgegebene Zeitdauer vorgegebene elektrische Spannung oder einen für eine vorgegebene Zeitdauer vorgegebenen elektrischen Strom auszulösen.

3. Versorgungsnetz (1) nach Anspruch 1 oder 2, wobei die Zündeinrichtung (6) und das Auslösesteuergerät (8) über einen oder mehrere separate Strom-/ Umrichter (7) mit elektrischer Energie versorgt sind.

4. Versorgungsnetz (1) nach einem der Ansprüche 1 bis 3, wobei das Auslösesteuergerät (8) ausgebildet ist, externe Signale zu empfangen und das Auslösesignal zu generieren, wenn ein oder mehrere der folgenden Fehlerereignisse vorliegen:
- Erkennung eines Überstroms im Vergleich mit einem vorgegebenen Schwellenwert, der insbesondere abhängig von einem durch Zustandsgrößen angegebenen Zustand eines elektrischen Energiespeichers (2) ist;
- Empfangen eines analogen Abschaltsignals, insbesondere ein Kollisionssignal, das einen Aufprall anzeigt;
- Empfangen einer Kollisionsinformation, die einen Aufprall anzeigt, über ein Bussystem, insbesondere über einen Fahrzeugbus (10);
- Empfangen eines digitalen Abschaltsignals von extern, insbesondere ein digitales Kollisionssignal, das einen Aufprall anzeigt.

5. Versorgungsnetz (1) nach einem der Ansprüche 1 bis 4, wobei das Auslösesteuergerät (8) zum Überwachen der Funktion der Zündeinrichtung (6) und die Zündeinrichtung (6) zum Überwachen des Auslösesteuergeräts (8) und des Zündelements (52a, 52b) ausgebildet sind.

6. Versorgungsnetz (1) nach einem der Ansprüche 1 bis 5, wobei ein weiteres redundantes Auslösesteuergerät (15) ausgebildet ist, ein oder mehrere Fehlerereignisse zu erkennen, wobei das Auslösesignal (AS) abhängig von der Erkennung des einen oder der mehreren Fehlerereignisse in dem Auslösesteuergerät (8) und dem weiteren Auslösesteuergerät (15) generiert wird.

7. Versorgungsnetz (1) nach einem der Ansprüche 1 bis 6 mit Versorgungsleitungen (4a, 4b), wobei das Auslösesteuergerät (8) durch den Strom-/Umrichter (7) oder durch einen separaten Strom-/Umrichter (7a) versorgt ist, der seine elektrische Energie über die Versorgungsleitungen (4a, 4b) bezieht.

8. Versorgungsnetz (1) nach Anspruch 7, wobei der Strom-/Umrichter (7) mit den Versorgungsleitungen (4a, 4b) zwischen einem elektrischen Energiespeicher (2) und dem mindestens einen Trennelement (5a, 5b) verbunden ist, so dass auch nach dem Auslösen des mindestens einen Trennelements (5a, 5b) der Strom-/Umrichter (7) mit elektrischer Energie versorgt wird.

## Claims

1. Supply system (1) having supply lines (4a, 4b), having an electrical load supplied with electrical power via the supply lines (1) and having an interrupting apparatus, in particular a supply system (1) of an electrical drive system of a motor vehicle, wherein the interrupting device comprises:
- at least one pyrotechnic isolating element (5a, 5b) arranged in one or more of the supply lines (4a, 4b) of the supply system (1);
- an ignition device (6) designed to trip the at least one pyrotechnic isolating element (5a, 5b) in response to a tripping signal, wherein the ignition device (6) is supplied with power by a converter (7) which draws its electrical power via the supply lines (4a, 4b);
- a tripping control unit (8) designed to generate the tripping signal in response to one or more fault events; **characterized in that** the interrupting device further comprises:
- a further converter (7a) connected to the supply lines (4a, 4b) via a switch (20) in order to completely interrupt the supply to the interrupting apparatus (6) for the purpose of optimizing the standby current of the supply system (1) in standby mode and to switch said supply on again in the event of a possible fault,
- a voltmeter (82) designed to actuate the switch (20) by way of voltage detection of the one or both tripping control units (8, 15) if a predefined voltage threshold equal to or less than an overcurrent voltage threshold value, which when exceeded causes a tripping signal to be generated, is reached.

2. Supply system (1) according to Claim 1, wherein the at least one pyrotechnic isolating element (5a, 5b) has a pyrotechnic ignition element (52a, 52b) which is coupled to a switching element (51a, 51b) in such a way that the switching element (51a, 51b) ensures electrical isolation when the ignition element (52a, 52b) is tripped, wherein the tripping control unit (8) or the ignition device (6) are designed so as to trip the ignition element (52a, 52b) by way of a voltage predefined for a predefined duration or an electrical current predefined for a predefined duration.

3. Supply system (1) according to Claim 1 or 2, wherein the ignition device (6) and the tripping control unit (8) are supplied with electrical power via one or more separate converters (7).

4. Supply system (1) according to one of Claims 1 to 3, wherein the tripping control unit (8) is designed to receive external signals and to generate the tripping signal if one or more of the following fault events occur:
- detecting an overcurrent in comparison with a predefined threshold value, which is in particular based on a state, specified by state variables, of an electrical energy store (2);
- receiving an analogue interrupt signal, in particular a collision signal, which indicates an impact;
- receiving collision information, which indicates an impact, via a bus system, in particular via a vehicle bus (10) ;
- receiving from an external source a digital interrupt signal, in particular a digital collision signal, which indicates an impact.

5. Supply system (1) according to one of Claims 1 to 4, wherein the tripping control unit (8) is designed to monitor the operation of the ignition device (6) and the ignition device (6) is designed to monitor the tripping control unit (8) and the ignition element (52a, 52b).

6. Supply system (1) according to one of Claims 1 to 5, wherein a further redundant tripping control unit (15) is designed to detect one or more fault events, wherein the tripping signal (AS) is generated in the tripping control unit (8) and the further tripping control unit (15) in response to the detection of the one or more fault events.

7. Supply system (1) according to one of Claims 1 to 6 having supply lines (4a, 4b), wherein the tripping control unit (8) is supplied with power by the converter (7) or by a separate converter (7a) which draws its electrical power via the supply lines (4a, 4b).

8. Supply system (1) according to Claim 7, wherein the converter (7) is connected to the supply lines (4a, 4b) between an electrical energy store (2) and the at least one isolating element (5a, 5b) such that the converter (7) is supplied with electrical power even after the at least one isolating element (5a, 5b) has been tripped.

## Revendications

1. Réseau d'alimentation (1) comprenant des lignes d'alimentation (4a, 4b), une charge électrique alimentée en énergie électrique par le biais des lignes d'alimentation (1) et comprenant un arrangement de mise hors circuit, notamment un réseau d'alimentation (1) d'un système de propulsion d'un véhicule motorisé, le dispositif de mise hors circuit comprenant :
- au moins un élément de séparation pyrotechnique (5a, 5b), qui est disposé dans une ou plusieurs des lignes d'alimentation (4a, 4b) du réseau d'alimentation (1) ;
- un dispositif d'allumage (6), qui est configuré pour déclencher l'au moins un élément de séparation pyrotechnique (5a, 5b) en fonction d'un signal de déclenchement, le dispositif d'allumage (6) étant alimenté par un convertisseur/convertisseur statique (7), lequel acquiert son énergie électrique par le biais des lignes d'alimentation (4a, 4b) ;
- un contrôleur de déclenchement (8), qui est configuré pour générer le signal de déclenchement en fonction d'un ou plusieurs événements de défaut ; **caractérisé en ce que** le dispositif de mise hors circuit comprend en outre :
- convertisseur/convertisseur statique supplémentaire (7a), qui est relié aux lignes d'alimentation (4a, 4b) par le biais d'un commutateur (20) afin de mettre complètement hors circuit l'alimentation du dispositif mise hors circuit (6) en vue d'optimiser le courant de repos du réseau d'alimentation (1) en mode de repos et le remettre en circuit en présence d'un cas de défaut possible,
- un voltmètre (82), qui est configuré pour commander le commutateur (20) par le biais d'une reconnaissance de tension de l'un ou des deux contrôleurs de déclenchement (8, 15) lorsqu'un seuil de tension prédéfini, lequel est égal ou inférieur à une valeur de seuil de tension de surintensité dont le dépassement entraîne la génération d'un signal de déclenchement, est atteint.

2. Réseau d'alimentation (1) selon la revendication 1, l'au moins un élément de séparation pyrotechnique (5a, 5b) comprenant un élément d'allumage pyrotechnique (52a, 52b) qui est couplé à un élément de commutation (51a, 51b) de telle sorte qu'en cas de déclenchement de l'élément d'allumage (52a, 52b), il se produit une séparation galvanique par le biais de l'élément de commutation (51a, 51b), le contrôleur de déclenchement (8) ou le dispositif d'allumage (6) étant configurés de manière à déclencher l'élément d'allumage (52a, 52b) par une tension électrique prédéfinie pendant une durée prédéfinie ou un courant électrique prédéfini pendant une durée prédéfinie.

3. Réseau d'alimentation (1) selon la revendication 1 ou 2, le dispositif d'allumage (6) et le contrôleur de déclenchement (8) étant alimentés en énergie électrique par le biais d'un ou plusieurs convertisseurs/convertisseurs statiques (7) séparés.

4. Réseau d'alimentation (1) selon l'une des revendications 1 à 3, le contrôleur de déclenchement (8) étant configuré pour recevoir des signaux externes et générer le signal de déclenchement lorsqu'un ou plusieurs des événements de défaut suivants sont présents :
- reconnaissance d'une surintensité en comparaison d'une valeur de seuil prédéfinie, laquelle est notamment dépendante d'un état d'un accumulateur d'énergie électrique (2) indiqué par des grandeurs d'état ;
- réception d'un signal de mise hors circuit analogique, notamment d'un signal de collision, qui indique un impact ;
- réception d'une indication de collision, qui indique un impact, par le biais d'un système de buse, notamment par le biais d'un bus de véhicule (10) ;
- réception d'un signal de mise hors circuit numérique, notamment d'un signal de collision numérique, qui indique un impact.

5. Réseau d'alimentation (1) selon l'une des revendications 1 à 4, le contrôleur de déclenchement (8) étant configuré pour surveiller le fonctionnement du dispositif d'allumage (6) et le dispositif d'allumage (6) pour surveiller le contrôleur de déclenchement (8) et l'élément d'allumage (52a, 52b).

6. Réseau d'alimentation (1) selon l'une des revendications 1 à 5, un contrôleur de déclenchement redondant supplémentaire (15) étant configuré pour reconnaître un ou plusieurs événements de défaut, le signal de déclenchement (AS) étant généré en fonction de la reconnaissance de l'un ou des plusieurs événements de défaut dans le contrôleur de déclenchement (8) et le contrôleur de déclenchement supplémentaire (15).

7. Réseau d'alimentation (1) selon l'une des revendications 1 à 6, comprenant des lignes d'alimentation (4a, 4b), le contrôleur de déclenchement (8) étant alimenté par le convertisseur/convertisseur statique (7) ou par un convertisseur/convertisseur statique supplémentaire (7a), lequel acquiert son énergie électrique par le biais des lignes d'alimentation (4a, 4b) .

8. Réseau d'alimentation (1) selon la revendication 7, le convertisseur/convertisseur statique (7) étant relié par les lignes d'alimentation (4a, 4b) entre un accumulateur d'énergie électrique (2) et l'au moins un élément de séparation (5a, 5b), de sorte le convertisseur/convertisseur statique (7) soit alimenté en énergie électrique même après le déclenchement de l'au moins un élément de séparation (5a, 5b).
